Europäisches Patentamt

European Patent Office

Office européen des brevets

(11) Publication number: 0 360 214
A2

# EUROPEAN PATENT APPLICATION

(21) Application number: 89117293.4

(51) Int. Cl.5 C09J 7/00 , C09J 163/00

(22) Date of filing: 19.09.89

(30) Priority: 21.09.88 JP 238602/88
27.12.88 JP 330933/88
06.09.89 JP 232175/89

(43) Date of publication of application:
28.03.90 Bulletin 90/13

(84) Designated Contracting States:
BE DE FR GB IT SE

(71) Applicant: NITTO DENKO CORPORATION
1-2, Shimohozumi 1-chome Ibaraki-shi
Osaka(JP)

(72) Inventor: Yamamoto, Kazuhiko c/o Nitto
Denko Corp.
1-2, Shimohozumi 1-chome
Ibaraki-shi Osaka(JP)
Inventor: Yamamoto, Hiraku c/o Nitto Denko
Corp.
1-2, Shimohozumi 1-chome
Ibaraki-shi Osaka(JP)
Inventor: Uratsuka, Isao c/o Nitto Denko Corp.
1-2, Shimohozumi 1-chome
Ibaraki-shi Osaka(JP)
Inventor: Hosokawa, Toshitsugu c/o Nitto
Denko Corp.
1-2, Shimohozumi 1-chome
Ibaraki-shi Osaka(JP)

(74) Representative: Patentanwälte Grünecker,
Kinkeldey, Stockmair & Partner
Maximilianstrasse 58
D-8000 München 22(DE)

(54) Spot-weldable sheet adhesive.

(57) Disclosed is a spot-weldable sheet adhesive comprising a composition containing an epoxy resin component, a hardening agent, a foaming agent and a needle electroconductive filler and optionally additionally containing a synthetic rubber component. The sheet adhesive has excellent adhesiveness, sealing property, easy handlability and durability.

Fig. 1a

## SPOT-WELDABLE SHEET ADHESIVE

### FIELD OF THE INVENTION

The present invention relates to a spot-weldable sheet adhesive which is used for adhesion of metal parts of bodies of cars, airplanes or ships as well as electric applicances and other various instruments.

### BACKGROUND OF THE INVENTION

In general, metal structures are constructed by welding and integrating the previously shaped parts. For instance, in construction of a car body, the hemming part of door is welded to the panel essentially by spot-welding. In the case, an adhesive may optionally be employed for welding.

As the adhesive to be used for the purpose, there are a liquid adhesive and a sheet adhesive. It is known that an electroconductive filler-containing sheet adhesive is employed from the viewpoint of the advantageous operatability and for the purpose of preventing the adhesive from dripping or flowing down. (For instance, refer to Japanese Patent Application Laid-Open No. 60-173075).

However, where the clearance between the metal parts to be welded is larger than the thickness of the sheet adhesive to be used for welidng the parts, there often occurs a problem that the adhesive could not adhere well to the both parts so that it could not display satisfactory adhering function and sealing function.

### SUMMARY OF THE INVENTION

The present invention has been effected for the purpose of overcoming the said problem and it provides a spot-weldable adhesive sheet having excellent adhesiveness, sealing property, handlability and durability.

Specifically, the present invention provides a spot-weldable sheet adhesive comprising a composition containing an epoxy resin component, a hardening agent, a foaming agent and a needle electroconductive filler.

As one preferred embodiment of the present invention, the spot-weldable sheet adhesive further contains a synthetic rubber component.

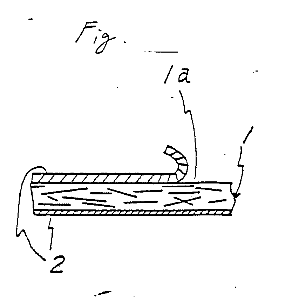

### BRIEF EXPLANATION OF THE DRAWING

The drawing is a sectional view of one embodiment of the sheet adhesive of the present invention where a release film has been laminated on both surfaces of the adhesive sheet.

(1) is an adhesive composition, (1a) is a needle electroconductive filler, and (2) is a release film.

### DETAILED DESCRIPTION OF THE INVENTION

The epoxy resin component for use in the present invention includes, for example, glycidyl ether type, glycidyl ester type, glycidyl amine type, linear aliphatic epoxide type and alicyclic epoxide type epoxy resins. Such epoxy resins generally have a number average molecualr weight of from 200 to 6000 and an epoxy equivalent of from 100 to 5000.

Especially preferably, a high molecular thermoplastic resin to be derived from bisphenol A and epichlorohydrin is incorporated into the said epoxy resin for use in the present invention. By incorporation of such high molecular thermoplastic resin, the resulting resin composition is to have an elevated cohesive force, a flexible property and an excellent sheet-forming capacity. The high molecular thermoplastic resin as referred to herein means a thermoplastic resin having a number average molecular weight of at least 10,000 or more, which is, for example, a phenoxy resin and the like.

The proportion of the said thermoplastic resin to be incorporated is from 5 to 150 parts by weight, preferably from 20 to 80 parts by weight, to 100 parts by weight of epoxy resin. By limiting the proportion of the thermoplastic resin within the said range, the effect of the thermoplastic resin may well be attained without interfering with the excellent characteristic of the epoxy resin.

As the hardening agent, those which are stable at room temperature and are active even at a high temperature are employed. In particular, nitrogen-containing substances which are decomposed at a high temperature to give an at least one active hydrogen-containing amine, such as monoureas, polyureas, hydrazides or thioureas, are preferably employed. For example, there are mentioned 3-(p-chlorophenyl)-1,1-dimethylurea, 2,4-bis(N,N-dimethylcarbamido)toluene and dicyandiamide. Needless to say, other hardening agents such as acid anhydrides, imidazoles or imidazolines may also be employed. If desired, a hardening accelerator may also be used.

The amount of the hardening agent to be incorporated into the composition of the present invention varies, depending upon the kind of the hardening agent as well as the condition of using the sheet adhesive to be derived from the composition. Generally, it is from 0.5 to 130 parts by weight, preferably from 5 to 50 parts by weight, to 100 parts by weight of the epoxy resin component.

The foaming agent to be incorporated into the composition of the present invention is one to foam under heat to display the adhering function and additionally the sealing function for welding the metal parts to each other. The agent is not specifically limited but may be anyone which may foam at the time when the adhesive is heated and hardened. Specifically, the foaming agent includes substances which generates a gaseous material by chemical reaction, for example azo compounds such as azodicarbonamide or azobisisobutyronitrile, nitroso compounds such as dinitrosopentamethylenetetramine and hydrazide compounds such as paratoluenesulfonylhydrazide, as well as microcapsules containing a low boiling point hydrocarbon as a foaming component.

The said agents may be employed singly or as a mixture thereof, and if desired, a foaming aid such as urea or a metal salt of a carboxylic acid may also be employed together with the said foaming agent.

The amount of the foaming agent to be incorporated into the composition of the present invention varies, depending upon the kind thereof. Generally, it is from 0.1 to 5 parts by weight or so to 100 parts by weight of the epoxy resin component, and it is to be so adjusted that the foaming magnification may be from 1.1 to 3.0 times, preferably from 1.2 to 2.0 times. By limiting the foaming magnification within the said range, the adhesive of the present invention can sufficiently display the sealing function without interfering with the adhering function thereof. It is desired that the adhesive may have a closed-cellular structure, after foamed, in view of the sealing property of itself.

In accordance with the present invention, the needle electroconductive filler is added to the composition for the purpose of improving the spot-weldability of the resulting adhesive. Accordingly, the material is desired to have an electroconductivity and may be melted and integrated with the metal parts to be welded. For instance, there are mentioned various metals of Fe, Cu, Zn, Pb or Al and alloys of such metals.

As the preferred size of such needle electroconductive filler, the mean diameter is preferably from 5 to 100 μm and the aspect ratio is from 10 to 100, and more preferably, the mean diameter is from 10 to 50 μm and the aspect ratio is from 40 to 70. The mean diameter as referred to herein indicates a mean value of the thickness of needles of the filler; and the aspect ratio indicates the ratio obtained by dividing the length by the thickness. By limiting the mean diameter and the aspect ratio within the said ranges, a desired thickness can be obtained by the overlapped filler needles and a better weldability can therefore be obtained without lowering the dispersibility of the filler in the resin and without lowering the easy operatability of the resulting adhesive.

The needle filler as referred to herein indicates that the filler is in a needle-like or rod-like form as a kind of the shape of fibers. It is linear and may always maintain the same linear form because of the rigitidy of itself. However, the needle-shape of the filler may be somewhat curved and the surface of the needle filler may be somewhat rough. The cross section of the needle filler may be anyone of circle, oval or rectangle.

By incorporating the needle electroconductive filler and not any other spherical or mica-like filler, an excellent spot-weldability can be attained. This is because the filler needles most overlap with each other in the spot-welded part, as compared with any other fillers having the same volume but a different shape, and therefore the highest weldability can be obtained when an electric current is applied to the overlapped filler needles.

Although varying in accordance with the aspect ration of the needle electroconductive filler, the proportion of the filler to be incorporated into the adhesive composition of the present invention is generally from 10 to 70 % by weight, preferably from 20 to 50 % by weight. By limiting the proportion of the filler within the said range, a better spot-weldability can be attained without interfering with the excellent characterisitc of the epoxy resin itself.

As a preferred embodiment of the present invention, the adhesive composition may further contain a synthetic rubber component. As examples of the synthetic rubber component, there are mentioned (1) a synthetic rubber such as isoprene rubber, butadiene rubber or chloroprene rubber, (2) a copolymer rubber such as butyl rubber, styrene-butadiene rubber or acrylonitrile-butadiene rubber, (3) a reactive rubber formed by adding a functional group which reacts with the epoxy group of epoxy resins, such as carboxyl group or amino group, to the above-mentioned (1) or (2), and (4) a reactive rubber formed by adding an epoxy group to the above-mentioned (1) or (2). These rubber components can be employed singly or as a mixture of two or more of them. Using the above-mentioned reactive rubber (3), an epoxy resin may be modified and the resulting rubber-modified epoxy resin may also be employed in the present invention. The above-mentioned reactive rubber (4) can be reacted with an epoxy resin-hardening agent.

By incorporation of such rubber component into the adhesive composition of the present invention, the initial adhesiveness of the composition, before hardened, increases so that the sheet adhesive may well be applied to the parts to be welded more firmly, especially to oil-coated steel sheets, and additionally the sheet-forming capacity is improved. Furthermore, the adhesion durability after hardened, esepcially impact-resistance of the hardened adhesive is improved.

The proportion of the synthetic rubber component to the above-mentioned epoxy resin is from 5 to 200 parts by weight, preferably from 10 to 80 parts by weight, of the synthetic rubber component to 100 parts by weight of the epoxy resin. By limiting the proportion within the said range, the effect of the synthetic rubber component can sufficiently be attained without interfering with the excellent characteristic of the epoxy resin itself.

In addition to the above-mentioned components, the composition for the sheet adhesive of the present invention may further contain, if desired, a filler such as calcium carbonate powder or metal powder as well as an antioxidant, a dripping inhibitor and a colorant.

The composition for the sheet adhesive of the present invention preferably has a viscosity of from 5 x $10^4$ to 5 x $10^6$ ps, especially preferably from 2 x $10^5$ to 3 x $10^6$ ps, at 30°C, for the purpose of satisfactorily expressing the excellent removability from the release film, which is mentioned hereunder, when formed into a sheet, or expressing the excellent spot-weldability.

For preparing the sheet adhesive of the present invention, the above-mentioned components are first blended in a mixing and stirring container or various kneaders or with a mixing roll or the like, at room temperature or a temperature not causing hardening and foaming (slight hardening and foaming would be acceptable) to obtain a resin composition, and then the composition is shaped into a sheet with coaters such as roll coater or knife coater or by various compression shaping or extrusion moulding machines.

The thickness of the thus prepared sheet adhesive of the present invention is not specifically limited but it may be from 0.2 to 4 mm or so, generally from 0.5 to 1.5 mm or so.

In accordance with the object and use, the sheet may be punched into any desired shape, if desired.

Further, a release film may optionally be laminated on one or both surfaces of the said sheet.

The release film is not specifically limited provided that it has a release effect, but preferably a silicone treated paper, or a silicone treated plastic film or fluorine resin sheet can be employed.

For the purpose of more improving the sheet-forming capacity, the said composition may be laminated on one or both surfaces of a pertinent base. As the base to be used for the purpose, a metallic net, strip, plate or porous plate is preferably employed so as not to lower the spot-weldability of the resulting sheet adhesive.

The sheet adhesive of the present invention has various advantages. Specifically, it has an excellent spot-weldability as containing the needle electroconductive filler and it has excellent adhesiveness and sealing property and can be handled with ease as contianing the foaming agent. In addition, the sheet adhesive of the present invention has further advantages of excellent adhesiveness to the parts to be welded, excellent sheet-forming capacity and high adhesion durability, when it contains a rubber component.

The following examples are intended to illustrate the present invention in more detail but not to limit it in any way.

EXAMPLES 1 TO 3:

Various adhesive compositions each having the components indicated in Table below were prepared. Specifically, (a) and (b) were first melted in a melting container at 180°C for 2 hours, and then (e), (f) and

4

(g) were added thereto at 80°C and further kneaded for 1 hour. Next, (h) and (i) were added and kneaded further to obtain a composition.

EXAMPLE 4:

An adhesive composition having the components indicated in Table below was prepared. Specifically, (a) and (b) were first melted in a melting container at 180°C for 2 hours and then (c) was added thereto at 60°C and stirred for further 1 hour. Next, (e), (f) and (g) were added and kneaded for about 1 hour at 80°C and then (h) and (i) were added and further kneaded for 5 to 10 minutes to obtain a composition.

EXAMPLE 5:

80 parts by weight of novolak epoxy resin having an epoxy equivalent of about 180 and a number average molecular weight of about 370 and 20 parts by weight of carboxyl group-containing acrylonitrile-butadiene copolymer having a number average molecular weight of 3400, an average number of carboxyl groups of 1.9 and an acrylonitrile content of 18 % were reacted in a melting container at 140°C for 2 hours to obtain a rubber-modified epoxy resin (d) (epoxy equivalent: 235 to 245).

First, (a) and (b) were melted in the same manner as in Example 1 and then the above-mentioned rubber-modified epoxy resin (d) was added thereto and stirred at 80°C for 1 hour. Next, (e), (f), (g), (h) and (i) were added and kneaded in the same manner as in Example 1, to obtain a composition.

EXAMPLE 6:

The rubber-modified epoxy resin (d) obtained in Example 5, (a) and (b) as melted in the same manner as in Example 4 and isoprene rubber (c) were stirred for 1 hour at 80°C, and then (e), (f), (g), (h) and (i) were added thereto and kneaded in the same manner as in Example 4, to obtain a composition.

Each of the thus prepared compositions was heated at 100°C and formed into a 0.5 mm thick sheet adhesive with a roll coater.

The viscosity, initial adhesiveness and spot-weldability of the sheet adhesive, as well as the shearing adhesion power, foamed magnification and adhesion durability thereof, after heated and hardened, were evaluated by the methods mentinoned below. The results obtained are shown in Table below.

(1) Viscosity:

Using a capillary reometer, the viscosity was measured at 30°C.

(2) Initial Adhesiveness:

A sheet adhesive sample having a width of 25 mm was stuck to a rust-inhibiting oil-coated SPCC-D steel plate. After 60 seconds, the sheet was peeled off with an angle of 180 degrees, whereupon the adhesion strength was referred to as the initial adhesiveness.

(3) Spot-weldability:

The non-hardened test sample as prepared in (2) was subjected to spot-welding under the condition of a pressure of from 200 to 250 kg/cm$^2$, a squeezing time of 0.5 second, an electric current charge of 10 KA and an electrically charged period of 0.2 second.

(4) Shear Adhesion:

Two sheets of SPCC-D steel plate (100 x 25 x 1.6 mm) were stuck to each other with a 0.5 mm thick sheet adhesive to prepare a test sample, whereupon the lapped length was 25 mm. The test sample was then heated and hardened at 180°C for 25 minutes.

The test sample was subjected to a tensile test with a tensile tester whereupon it was tensed at room temperature at a tensing speed of 5 mm/min and the breaking strength was referred to as the shearing adhesion power.

(5) Foamed Magnification:

It was represented by the ratio of the thickness of the sheet adhesive after heated and foamed to the thickness of the non-foamed sheet adhesive.

(6) Shear Adhesion Durability:

The test sample as used in (4) for shearing adhesion power test was stored under the condition mentioned below and the shearing adhesion power of the thus stored test sample was again checked for evaluation of the adhesion durability.

(a) Stored for one month in a hot air-type drier at 80°C.

(b) Stored for one month in a thermostat at 40°C and 98% RH.

6

Table

| Components | | Ex. 1 | Ex. 2 | Ex. 3 | Ex. 4 | Ex. 5 | Ex. 6 |
|---|---|---|---|---|---|---|---|
| Formulaiton of Adhesive | (a) Bisphenol A Epoxy Resin (epoxy equivalent: 180 to 190) | 80 | 75 | 75 | 70 | 40 | 50 |
| | (b) Phenoxy Resin (number average molecular weight: 20000) | 20 | 25 | 25 | 20 | 25 | 25 |
| | (c) Isoprene Rubber (viscosity average molecular weight: 30000) | - | - | - | 10 | - | 5 |
| | (d) Rubber-Modified Epoxy Resin | - | - | - | - | 35 | 20 |
| | (e) Needle Electroconductive Filler — Fe (diam. 50 $\mu$m, aspect ratio 60) | 30 | - | - | 30 | - | - |
| | Cu (diam. 25 $\mu$m, aspect ratio 50) | - | 50 | 50 | - | 50 | 50 |
| | (f) Foaming Agent — 4,4'-Hydroxybisbenzenesulfonylhydrazide | 1 | 1 | 0.5 | 1 | 1 | 0.5 |
| | Azodicarbonamide | - | - | - | - | - | - |
| | (g) Calcium Carbonate | 50 | 50 | 50 | 50 | 50 | 50 |
| | (h) Hardening Agent Dicyandiamide | 5 | 5 | 5 | 5 | 5 | 5 |
| | (i) Hardening Accelerator 3-(P-chlorophenyl)-1,1-dimethylurea | 1.5 | 1.5 | 1.5 | 1.5 | 1.5 | 1.5 |
| Characteristics of Adhesive | Viscosity (ps, 30°C) | $2 \times 10^5$ | $4 \times 10^5$ | $4 \times 10^5$ | $1 \times 10^5$ | $5.5 \times 10^5$ | $3.5 \times 10^5$ |
| | Initial Adhesiveness (g/25 mm width) | 57 | 43 | 45 | 220 | 154 | 213 |
| | Spot-weldability | Good | Good | Good | Good | Good | Good |
| Characteristics of Hardened Product | Shear Adhesion (kg/cm²) | 230 | 180 | 225 | 180 | 220 | 205 |
| | Foamed Magnification | 1.9 | 1.7 | 1.4 | 1.8 | 1.5 | 1.3 |
| | Shear Adhesion Durability (kg/cm²) — (a) | 245 | 195 | 247 | 185 | 240 | 218 |
| | (b) | 161 | 126 | 169 | 165 | 198 | 188 |

EP 0 360 214 A2

## Claims

1. A spot-weldable sheet adhesive comprising a composition containing an epoxy resin component, a hardening agent, a foaming agent and a needle electroconductive filler.

2. The spot-weldable sheet adhesive as claimed in claim 1, in which the epoxy resin component is one containing a high molecular thermoplastic resin derived from bisphenol A and epichlorohydrin.

3. The spot-weldable sheet adhesive as claimed in claim 1, which further contains a synthetic rubber component.

4. The spot-weldable sheet adhesive as claimed in claim 1, which contains the foaming agent in such amount that the foamed magnification falls within the range of from 1.1 to 3 times.

5. The spot-weldable sheet adhesive as claimed in claim 1, in which the needle electroconductive filler is one having a mean diameter of from 5 to 100 $\mu$m and an aspect ratio of from 10 to 100.

6. The spot-weldable sheet adhesive as claimed in claim 1, in which the composition has a viscosity of from $5 \times 10^4$ to $5 \times 10^6$ P at 30°C.

Fig. 1a